# EUROPEAN PATENT SPECIFICATION

(11) **EP 3 333 663 B1**
(45) Date of publication and mention of the grant of the patent: **01.12.2021**
(21) Application number: 16202595.1
(22) Date of filing: 07.12.2016
(51) Int. Cl.: G05D 1/02

(54) **TRACKING SYSTEM AND METHOD**
TRACKING-SYSTEM UND -VERFAHREN
SYSTÈME ET PROCÉDÉ DE SUIVI

(43) Date of publication of application: 13.06.2018
(73) Proprietor: Vestel Elektronik Sanayi ve Ticaret A.S., 45030 Manisa (TR)
(72) Inventor: KIRISKEN, Barbaros, 45030 Manisa (TR)
(74) Representative: Kehl, Ascherl, Liebhoff & Ettmayr Patentanwälte Partnerschaft mbB

(56) References cited:
- US-A1- 2005 192 707
- US-A1- 2014 124 004
- US-A1- 2015 006 016
- US-A1- 2016 000 288

## Description

### TECHNICAL FIELD

The invention relates to a tracking system for operating an autonomous vacuum cleaner and a corresponding method.

### BACKGROUND

Although applicable to any system that needs to track positions and travel paths of autonomous devices the present invention will mainly be described in conjunction with so-called autonomous vacuum cleaner, also called autonomous sweeper. Such autonomous vacuum cleaners are configured to clean a floor and/or a carpet, for example.

Typically a known autonomous vacuum cleaners randomly travels over a predetermined area or zone, in particular large areas of open space, wherein after being in contact with or after scanning an obstacle the autonomous vacuum cleaner changes its path, accordingly. For example, the changed path overlaps at least partially a previous travel path of the autonomous vacuum cleaner. A cleaning process is therefore conducted by frequently overlapping such areas with a constant suction capacity of the autonomous vacuum cleaner. Consequently, the autonomous vacuum cleaner can clean the predetermined area with the constant suction capacity, wherein a degree of cleanliness can be increased by iteratively passing e.g. the overlapping areas.

Further, the autonomous vacuum cleaner typically stops its cleaning process after a predetermined time. In other words in particular dusty zones of the predetermined area were not sufficiently sucked or cleaned.

Document US 2011/0112714 A1 discloses a method of navigating an area using a mobile robotic device.

Further, US 2015/006016 A1 discloses a service robot, such as a robotic cleaner, configured to more effectively service an environment. The service robot can include one or more sensors that sense its location, the location of objects, or both, and can also include noise reduction elements. The service robot can determine that it is under a "furnishing" and implement a different servicing pattern.

In addition, US 2016/000288 A1 discloses a self-propelled cleaner including: a movement unit configured to move a housing; a blower unit configured to generate an air current for sucking dust on a floor surface into the housing; a dust detection unit configured to detect dust contained in the air current; and a control unit configured to control the movement unit and/or the blower unit to select a cleaning mode according to a detection result of the dust detection unit, wherein the control unit is capable of changing a threshold value for selecting the cleaning mode.

Accordingly, there is a need for an improved tracking system for operating autonomous vacuum cleaner.

### SUMMARY

The present invention provides a tracking system with the features of claim 1 and a tracking method with the feature of claim 11.

The tracking system for operating an autonomous vacuum cleaner comprises a position determination device configured to detect position data of the autonomous vacuum cleaner within a spatially defined area. The tracking system further comprises a storage device configured to store a traveled path of the autonomous vacuum cleaner based on the determined position data within the spatially defined area. The storage device is further configured to store at least one threshold value of sucked particles along the traveled path. Finally, the tracking system is further configured to adjust a sucking capacity of the autonomous vacuum cleaner depending on the at least one stored threshold value in case that the autonomous vacuum cleaner at least partially overlaps the traveled path.

The tracking method for operating an autonomous vacuum cleaner comprises the steps of determining position data of the autonomous vacuum cleaner within a specially defined area. The method further comprises storing a travel path of the autonomous vacuum cleaner based on the determined position data within the spatially defined area and storing at least one threshold value of sucked particles along the traveled path. Finally, the method further comprises adjusting a sucking capacity of the autonomous vacuum cleaner depending on the at least one stored threshold value in case that the autonomous vacuum cleaner at least partially overlaps the traveled path.

The position determination device can be used e.g. to determine a smart routing or traveling algorithm, wherein the autonomous vacuum cleaner continuous or stops its sucking operation depending on the at least one stored threshold value when passing the a position at a second or third time. That is the system at least partially iteratively passes certain position data depending on the at least one stored threshold value. Therefore, the tracking system stops the operation such as vacuum cleaning or sucking if the at least one threshold value of certain position data have not been exceeded by simultaneously operating the travel of the autonomous vacuum cleaner. That is that the secondly or iteratively passed position data do not need to be cleaned anymore, for example In contrast, the system increases its sucking capacity in case that the at least one threshold value has been exceeded at a first time.

It is understood, that the tracking system runs the autonomous vacuum cleaner continuously from position point to position point, here mentioned as position data.

Under the term "particles" dust, dirt and objects normally sucked by an autonomous vacuum cleaner shall be understood.

The present invention uses the finding that by storing the travel path based on the determined position data and the at least one stored threshold value a time and energy efficient operation of the autonomous vacuum cleaner can be ensured or provided.

A size of the traveled path can depend on an e.g. cleaning area of or a suction area of the autonomous vacuum cleaner, respectively.

Further embodiments of the present invention are subject of the further sub-claims and of the following description, referring to the drawings.

In one embodiment, the traveled path based on the determined position data comprises overlapping areas, such as cross-over regions or intersections. The cross-over regions are predefined by the traveled path, wherein the traveled path is predetermined by the position data. That is the autonomous vacuum cleaner travels from point to point thereby defining the traveled path, wherein by crossing the predefined traveled path a cross-over region can be detected, stored or determined.

It is understood, that the overlapping areas can be passed iteratively.

In one embodiment, the traveled path comprises a minimal number of overlapping areas. Firstly, the tracking system can e.g. scan the spatially defined area via ultrasound, infrared-light or laser to determine distances to walls, for example. Secondly, the position determination device can e.g. detect, define or calculate position data with respect to the minimal number of overlapping areas. Therefore an operation time of the autonomous vacuum cleaner can be easily optimized by the system.

In one embodiment, the at least one threshold value is detected by a micromechanical device. The micromechanical device can be easily mounted, adjusted or arranged in or on the autonomous vacuum cleaner due to its small size. For example the micromechanical device comprises a particle sensor. The micromechanical device can further comprise a contact sensor.

In another embodiment, the micromechanical device is configured to detect at least three increasing threshold values. The autonomous vacuum cleaner can therefore adjust at least three different suction capacities. Thus the overlapping areas can be sucked with different suction capacities. Alternatively the autonomous vacuum cleaner can stop its operation when an amount of sucked particles is below a first threshold value.

In one embodiment, the sucking capacity of the autonomous vacuum cleaner increases with the increasing threshold values. Therefore the overlapping areas can be sucked with higher suction capacity and the overall operation time can be reduced. Consequently the here described tracking system can be operated in energy saving manner.

In one embodiment, the traveled path is at least partially an arcuate path. Therefore the traveled path based on the position data can be easily optimized.

In one embodiment, the storage device configured to store the traveled path of the autonomous vacuum cleaner based on the position data within the spatially defined area further comprises an electronic map and wherein the electronic map is configured to enter the at least one threshold value of the sucked particles in the electronic map. The electronic map can e.g. partition the spatially defined area based on a coordinate system. Therefore the autonomous vacuum cleaner can be e.g. operated based on the electronic map.

In one embodiment, the electronic map is configured to enter an existence of an obstacle within the spatially defined area. Therefore, the travel path can be optimized in consideration of the existence of the obstacle. The obstacle can be a wall, a step or a furniture item located within the spatially defined area.

In one embodiment, the position determination device is configured to communicate with a communication device at a predetermined reference position. The communication device at the predetermined reference position can be e.g. a server or a charging station. The position determination device can comprise a communication interface, e.g. a GSM interface, UMTS interface, LTE interface, WiFi interface or the like, and can be configured to provide or send its position data to the communication device at the predetermined reference position. The communication device may communicate with an external computer of a user such, that the user can modify the position data manually by reducing the spatially defined area, for example. Therefore the electronic map can be further supported by the communication device. Alternatively or in addition, the autonomous vacuum cleaner can be automatically charged by the communication device.

In one embodiment, the determination of the position data is conducted by communicating with the communication device at the predetermined reference position.

In another embodiment, the storage of the traveled path is conducted by the storage device and/or is further conducted by entering the at least one threshold value of the sucked particles in the electronic map.

In one embodiment, the detection of the at least one stored threshold value along the traveled path is conducted by the micromechanical device, such as the particle sensor.

The here disclosed features of the tracking system are also disclosed for the tracking method as well as the autonomous vacuum cleaner comprising the tracking system and vice versa.

### BRIEF DESCRITION OF THE DRAWINGS

For a more complete understanding of the present invention and advantages thereof, reference is now made to the following description taken in conjunction with the accompanying drawings. The invention is explained in more detail below using exemplary embodiments, which are specified in the schematic figures of the drawings, in which:
Fig. 1 shows a schematic top view of an embodiment of a tracking system according to the present patent application;
Fig. 2 shows a schematic top view of another embodiment of a tracking system according to the present patent application;
Fig. 3 shows a schematic top view of another embodiment of a tracking system according to the present patent application;
Fig. 4 shows a block diagram of an embodiment of a tracking system according to the present patent application;
Fig. 5 shows a flow diagram of an embodiment of a method according to the present patent application; and
Fig. 6 shows a schematic illustration of an autonomous vacuum cleaner according to the present patent application.

In the figures like reference signs denote like elements unless stated otherwise.

### DETAILED DESCRIPTION OF THE DRAWINGS

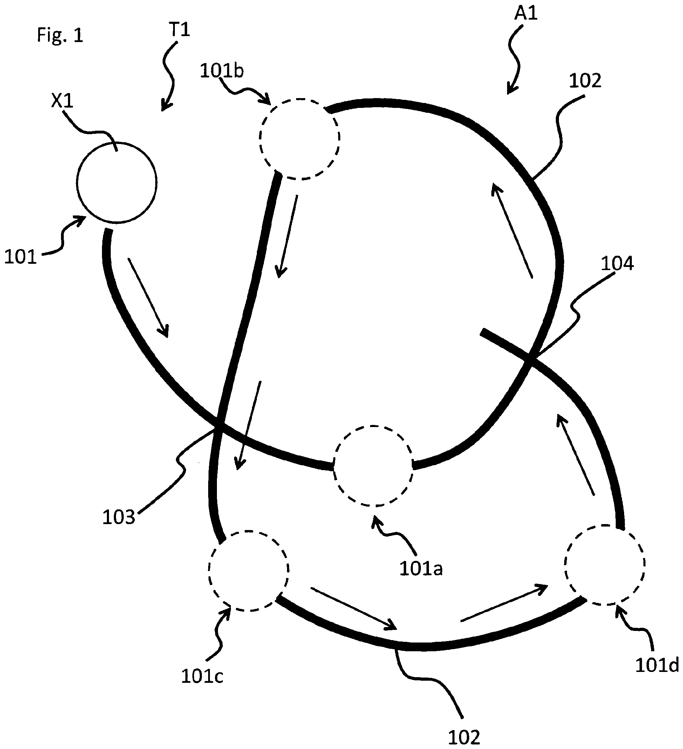

Fig. 1 shows a schematic top view of an embodiment of a tracking system. The tracking system T1 comprises an autonomous vacuum cleaner X1 within a spatially defined area A1. A direction of the autonomous vacuum cleaner X1 is indicated by arrows.

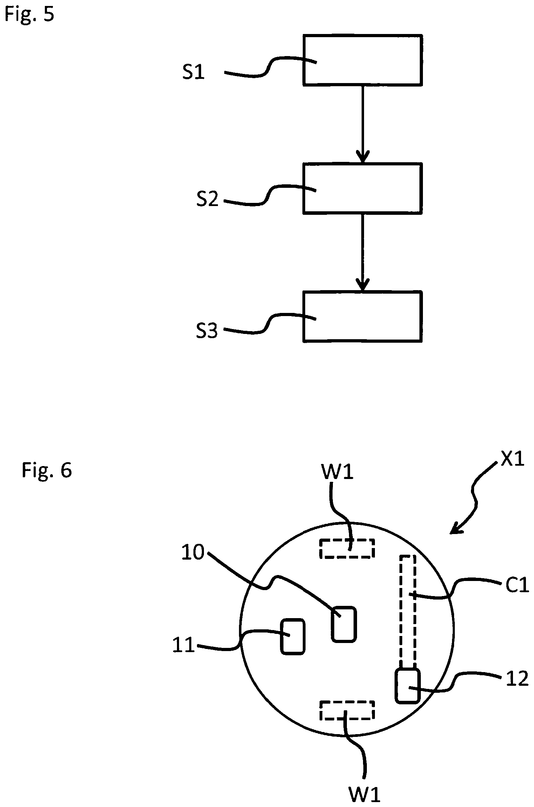

The tracking system T1 further comprises in particular a position determination device 10, a storage device 11 and a micromechanical device 12, wherein these devices can be mounted, arranged or attached in or on the autonomous vacuum cleaner X1. Preferably these devices are integral devices of the autonomous vacuum cleaner X1 (see Fig. 6).

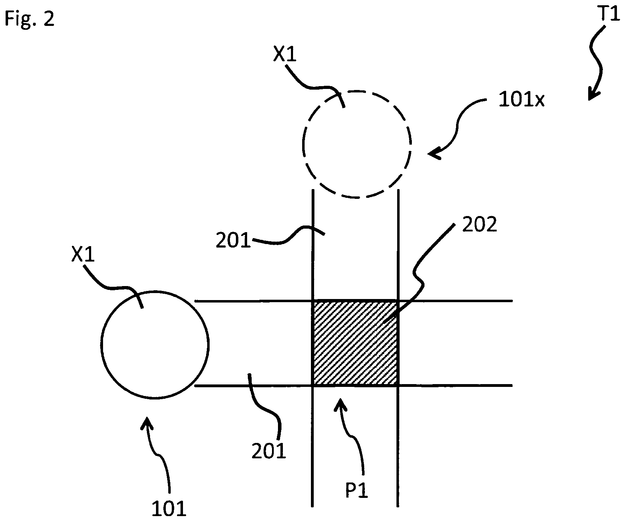

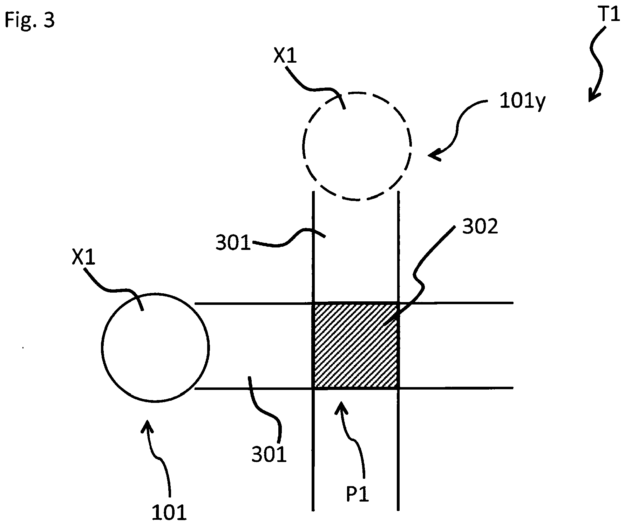

The position determination device 10 is configured to detect position data 101, 101a, 101b, 101c, 101d, 101x, 101y of the autonomous vacuum cleaner X1 within a spatially defined area A1. The storage device is further configured to store a traveled path 102, 201, 301 of the autonomous vacuum cleaner X1 based on the determined position data 101, 101a, 101b, 101c, 101d, 101x, 101y within the spatially defined area A1 and is configured to store at least one threshold value of sucked particles P1 along the traveled path 102, 201, 301 (see also Figs 2 and 3). Finally, the tracking system T1 is further configured to adjust a sucking capacity of the autonomous vacuum cleaner X1 depending on the at least one stored threshold value in case that the autonomous vacuum cleaner X1 at least partially overlaps the traveled path 102, 201, 301.

In Fig. 1 the determined position data 101, 101a, 101b, 101c, 101d, 101x, 101y are indicated along the traveled path 102 of the autonomous vacuum cleaner X1, wherein position data 101 comprises an exemplary starting point. The autonomous vacuum cleaner X1 travels along the path 102 passing the position data 101a, 101b, 101c, 101d, wherein the reference signs 103 and 104 indicates overlapping areas, such as cross-over regions, in Fig.1.

The overlapping area 103 does not exceed the at least one stored threshold value. Thus the sucking capacity can be maintained, reduced or turned to zero, for example. In contrast, the overlapping area 104 exceeds the at least one stored threshold value. Thus, the sucking capacity can be increased during crossing the overlapping area 104.

The traveled path 102 of Fig. 1 can comprise a minimal number of overlapping areas 103, 104, 202, 302 and the tracking system T1 can therefore reduce time and energy consumption, accordingly.

Fig. 2 shows a schematic top view of another embodiment of a tracking system.

Fig. 2 is based on Fig. 1 and illustrates a magnified view of an exemplary overlapping area 202. The autonomous vacuum cleaner X1 travels along the path 201 and passes the later overlapping area 202 at a first time. At the first time the storage device 11 of the tracking system T1 stores the at least one threshold value of sucked particles P1 along the traveled path 201. In case autonomous vacuum cleaner X1 passes the overlapping area 202 coming from position data 101x the tracking system T1 can maintain, reduce or stop the sucking capacity since an amount of sucked particles is beneath the stored threshold value of the first time.

Fig. 3 shows a schematic top view of another embodiment of a tracking system.

Fig. 3 is also based on Fig. 1 and illustrates a magnified view of an exemplary area 302. The autonomous vacuum cleaner X1 travels along the path 301 and passes the later overlapping area 302 at a first time. At the first time the storage device 11 of the tracking system T1 stores the at least one threshold value of sucked particles P1 along the traveled path 301 as well. In case the autonomous vacuum cleaner X1 passes the overlapping area 302 coming from position data 101y the tracking system T1 can maintain or increase the sucking capacity since an amount of sucked particles is above the stored threshold value of the first time.

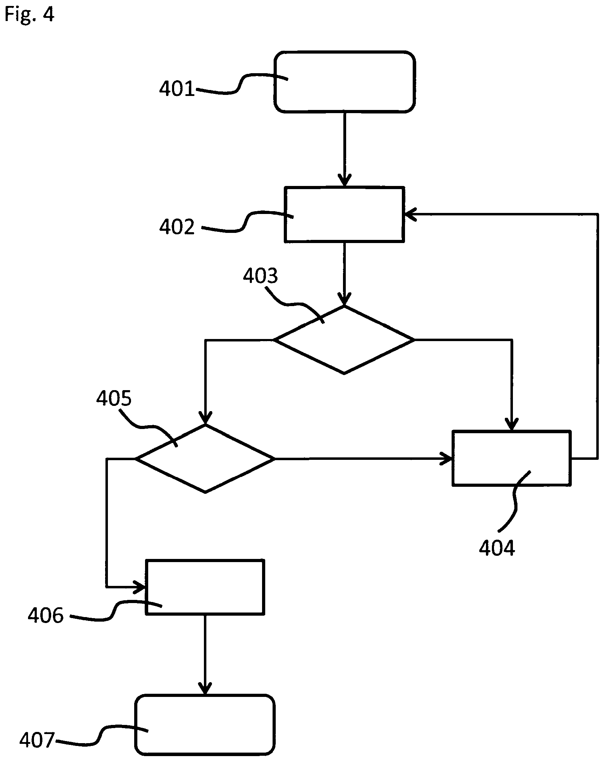

Fig. 4 shows a block diagram of an embodiment of a tracking system.

In particular, Fig. 4 shows a block diagram to explain an exemplary functionality of the tracking system T1. The rhombuses of Fig. 4 indicate decision points within the block diagram. The block diagram of Fig. 4 comprises steps 401 to 407.

In step 401 the tracking system T1 starts to detect or determine the position data 101, 101a, 101b, 101c, 101d, 101x, 101y. In step 402 the autonomous vacuum cleaner X1 travels its path 102, 201, 302 based on the detected or determined position data 101, 101a, 101b, 101c, 101d, 101x, 101y. In step 403 the tracking system decides if the position data 101, 101a, 101b, 101c, 101d, 101x, 101y has been passed before by the autonomous vacuum cleaner X1. In case the position data 101, 101a, 101b, 101c, 101d, 101x, 101y has not been passed before the autonomous vacuum cleaner X1 continues sweeping in step 404 and returns to step 402. In case the autonomous vacuum cleaner X1 has already passed the position data 101, 101a, 101b, 101c, 101d, 101x, 101y the tracking system T1 decides in step 405 if the suction capacity of the autonomous vacuum cleaner X1 has to be increased or maintained, for example. In case the suction capacity has to be increased or maintained the tracking system continues with step 404 with e.g. an increased or maintained suction capacity. In case the suction capacity has not to be maintained or increased in step 405 the tracking system detects and stores a clean area or stops the cleaning or sucking process in step 406. In step 407 the tracking system can end its operation and guides the autonomous vacuum cleaner X1 to a communication device at a predetermined reference position, such as a charging station.

Fig. 5 shows a flow diagram of an embodiment of a method. The tracking method for operating the autonomous vacuum cleaner X1 comprises the method steps S1 to S3.

In step S1 of the method position data 101, 101a, 101b, 101c, 101d, 101x, 101y of the autonomous vacuum cleaner 101 within a spatially defined area A1 are determined. In step S2 a traveled path 102, 201, 301 of the autonomous vacuum cleaner X1 based on the determined position data 101, 101a, 101b, 101c, 101d, 101x, 101y within the spatially defined area A1 is stored and at least one threshold value of sucked particles P1 along the traveled path 102, 201, 301 is stored, accordingly. Finally in step S3 of the method a sucking capacity of the autonomous vacuum cleaner X1 depending on the at least one stored threshold value is adjusted or determined in case that the autonomous vacuum cleaner X1 at least partially overlaps the traveled path 102, 201, 301.

Fig. 6 shows a schematic illustration of an autonomous vacuum cleaner.

The autonomous vacuum cleaner X1 comprises the here described tracking system T1. The autonomous vacuum cleaner X1 comprises in particular the position determination device 10, the storage device 11 and the micromechanical device 12. A size of the traveled path 102, 201, 301 can depend on an e.g. cleaning area of or a suction area C1 of the autonomous vacuum cleaner X1, respectively. The autonomous vacuum cleaner X1 can further comprise wheels W1 which are configured to support a movement of the autonomous vacuum cleaner X1.

Although specific embodiments have been illustrated and described herein, it will be appreciated by those of ordinary skill in the art that a variety of alternate and/or equivalent implementations exist. It should be appreciated that the exemplary embodiment or exemplary embodiments are only examples, and are not intended to limit the scope, applicability, or configuration in any way. Rather, the foregoing summary and detailed description will provide those skilled in the art with a convenient road map for implementing at least one exemplary embodiment, it being understood that various changes may be made in the function and arrangement of elements described in an exemplary embodiment without departing from the scope as set forth in the appended claims and their legal equivalents. Generally, this application is intended to cover any adaptations or variations of the specific embodiments discussed herein.

The present invention provides a tracking system T1. The tracking system T1 for operating an autonomous vacuum cleaner X1 comprises a position determination device 10 configured to detect position data 101, 101a, 101b, 101c, 101d, 101x, 101y of the autonomous vacuum cleaner X1 within a spatially defined area A1. The tracking system further comprises a storage device 11 configured to store a traveled path 102, 201, 301 of the autonomous vacuum cleaner X1 based on the determined position data 101, 101a, 101b, 101c, 101d, 101x, 101y within the spatially defined area A1. The storage device 11 is further configured to store at least one threshold value of sucked particles P1 along the traveled path 102, 201, 301. Finally, the tracking system T1 is further configured to adjust a sucking capacity of the autonomous vacuum cleaner X1 depending on the at least one stored threshold value in case that the autonomous vacuum cleaner X1 at least partially overlaps the traveled path 102, 201, 301 based on the detected position data (101, 101a, 101b, 101c, 101d, 101x, 101y). The present invention further provides a corresponding method.

### List of reference signs

- T1: tracking system
- X1: autonomous vacuum cleaner
- A1: spatially defined area
- P1: particles
- W1: wheels
- C1: cleaning area or suction area
- 5: obstacle
- 10: position determination device
- 101, 101a, 101b, 101c, 101d, 101x, 101y: position data

- 11: storage device
- 102, 201, 302: traveled path
- 103, 104, 202, 302: overlapping areas, such as cross-over region

- 12: micromechanical device

- 401-407: steps in block diagram
- S1-S3: steps in flow diagram

## Claims

1. Tracking system (T1) for operating an autonomous vacuum cleaner (X1), the tracking system (T1) comprising:
a position determination device (10) configured to detect position data (101, 101a, 101b, 101c, 101d, 101x, 101y) of the autonomous vacuum cleaner (X1) within a spatially defined area (A1);
a storage device (11) configured to store at least one threshold value of sucked particles (P1) along the traveled path (102, 201, 301);
**characterized in that** the storage device is further configured to store a traveled path (102, 201, 301) of the autonomous vacuum cleaner (X1) based on the determined position data (101, 101a, 101b, 101c, 101d, 101x, 101y) within the spatially defined area (A1) and
wherein the tracking system (T1) is configured to adjust a sucking capacity of the
autonomous vacuum cleaner (X1) depending on the at least one previously stored threshold
value in case that the autonomous vacuum cleaner (X1) at least partially overlaps the traveled path (102, 201, 301).

2. Tracking system according to claim 1, wherein the traveled path (102, 201, 301) comprises overlapping areas (103, 104, 202, 302).

3. Tracking system according to claims 1 to 2, wherein the traveled path (102, 201, 301) comprises a minimal number of overlapping areas (103, 104, 202, 302) based on the detected position data (101, 101a, 101b, 101c, 101d, 101x, 101y) of the autonomous vacuum cleaner (X1).

4. Tracking system according to any of the preceding claims, wherein the at least one threshold value is detected by a micromechanical device (12).

5. Tracking system according to claim 4, wherein the micromechanical device (12) is configured to detect dirt particles for comparing with at least three increasing threshold values.

6. Tracking system according to any of the preceding claims, wherein the sucking capacity of the autonomous vacuum cleaner (X1) increases with the increasing threshold values.

7. Tracking system according to any of the preceding claims, wherein the traveled path (102, 201, 301) is at least partially an arcuate path.

8. Tracking system according to any of the preceding claims, wherein the storage device configured to store the traveled path (102, 201, 301) of the autonomous vacuum cleaner (X1) based on the position data (101, 101a, 101b, 101c, 101d, 101x, 101y) within the spatially defined area (A1) further comprises an electronic map and wherein the electronic map is configured to enter dirt levels of the sucked particles (P1) in the electronic map.

9. Tracking system (10) according to claim 8, wherein the electronic map is configured to enter an existence of an obstacle (5) within the spatially defined area (A1).

10. Tracking system (10) according to any of the preceding claims, wherein the position determination device (10) is configured to communicate with a communication device at a predetermined reference position.

11. Tracking method for operating an autonomous vacuum cleaner (X1), the monitoring method comprising the steps of:
determining position data (101, 101a, 101b, 101c, 101d, 101x, 101y) of the autonomous vacuum cleaner (101) within a spatially defined area (A1),
storing in a storing device (11) at least one threshold value of sucked particles (P1) along the traveled path (102, 201, 301);
**characterized by** further storing a traveled path (102, 201, 301) of the autonomous vacuum cleaner (X1) based on the determined position data (101, 101a, 101b, 101c, 101d, 101x, 101y) within the spatially defined area (A1) and
adjusting a sucking capacity of the autonomous vacuum cleaner (X1) depending on
the at least one previously stored threshold value in case that the autonomous vacuum cleaner
(X1) at least partially overlaps the traveled path (102, 201, 301).

12. Tracking method according to claim 11, wherein the determination of the position data is conducted by communicating with a communication device at a predetermined reference position.

13. Tracking method according to claim 11, wherein the storage of the traveled path is conducted by the storage device (11) and/or is further conducted by entering the at least one threshold value of the sucked particles (P1) in an electronic map.

14. Tracking method according to claim 11, wherein a detection of the at least one stored threshold value along the traveled path (102, 201, 301) is conducted by a micromechanical device (12) based on the detection of particles.

15. Autonomous vacuum cleaner (X1) comprising a tracking system (T1) according to claims 1 to 10.

## Patentansprüche

1. Tracking-System (T1) zum Betreiben eines autonomen Staubsaugers (X1), wobei das Tracking-System (T1) umfasst:
eine Positionsbestimmungsvorrichtung (10), die so konfiguriert ist, dass sie Positionsdaten (101, 101a, 101b, 101c, 101d, 101x, 101y) des autonomen Staubsaugers (X1) innerhalb eines räumlich definierten Bereichs (A1) erfasst;
eine Speichervorrichtung (11), die so konfiguriert ist, dass sie mindestens einen Schwellenwert von angesaugten Partikeln (P1) entlang des zurückgelegten Weges (102, 201, 301) speichert;
**dadurch gekennzeichnet, dass** die Speichervorrichtung ferner so konfiguriert ist, dass sie einen zurückgelegten Weg (102, 201, 301) des autonomen Staubsaugers (X1) auf der Grundlage der bestimmten Positionsdaten (101, 101a, 101b, 101c, 101d, 101x, 101y) innerhalb des räumlich definierten Bereichs (A1) speichert und
wobei das Tracking-System (T1) so konfiguriert ist, dass es eine Saugleistung des autonomen Staubsaugers (X1) in Abhängigkeit von dem mindestens einen zuvor gespeicherten Schwellenwert anpasst, falls der autonome Staubsauger (X1) den zurückgelegten Weg (102, 201, 301) zumindest teilweise überlappt.

2. Tracking-System nach Anspruch 1, wobei der zurückgelegte Weg (102, 201, 301) Überlappungsbereiche (103, 104, 202, 302) umfasst.

3. Tracking-System nach Ansprüchen 1 bis 2, wobei der zurückgelegte Weg (102, 201, 301) eine minimale Anzahl von Überlappungsbereichen (103, 104, 202, 302) auf der Grundlage der erfassten Positionsdaten (101, 101a, 101b, 101c, 101d, 101x, 101y) des autonomen Staubsaugers (X1) umfasst.

4. Tracking-System nach einem der vorhergehenden Ansprüche, wobei der mindestens eine Schwellenwert durch eine mikromechanische Vorrichtung (12) erfasst wird.

5. Tracking-System nach Anspruch 4, wobei die mikromechanische Vorrichtung (12) so konfiguriert ist, dass sie Schmutzpartikel zum Vergleich mit mindestens drei ansteigenden Schwellenwerten erfasst.

6. Tracking-System gemäß einem der vorhergehenden Ansprüche, wobei die Saugleistung des autonomen Staubsaugers (X1) mit den ansteigenden Schwellenwerten zunimmt.

7. Tracking-System gemäß einem der vorangehenden Ansprüche, wobei der zurückgelegte Weg (102, 201, 301) zumindest teilweise ein gekrümmter Weg ist.

8. Tracking-System nach einem der vorhergehenden Ansprüche, wobei die Vorrichtung zum Speichern des zurückgelegten Weges (102, 201, 301) des autonomen Staubsaugers (X1) basierend auf den Positionsdaten (101, 101a, 101b, 101c, 101d, 101x, 101y) innerhalb des räumlich definierten Bereichs (A1) weiterhin eine elektronische Karte aufweist und wobei die elektronische Karte zum Eintragen von Verschmutzungsgraden der angesaugten Partikel (P1) in die elektronische Karte konfiguriert ist.

9. Tracking-System (10) nach Anspruch 8, wobei die elektronische Karte ausgebildet ist, um ein Vorhandensein eines Hindernisses (5) innerhalb des räumlich definierten Bereichs (A1) einzutragen.

10. Tracking-System (10) gemäß einem der vorhergehenden Ansprüche, wobei die Positionsbestimmungsvorrichtung (10) so konfiguriert ist, dass sie mit einer Kommunikationsvorrichtung an einer vorbestimmten Referenzposition kommuniziert.

11. Tracking-Verfahren zum Betreiben eines autonomen Staubsaugers (X1), wobei das Überwachungsverfahren die folgenden Schritte umfasst::
Ermitteln von Positionsdaten (101, 101a, 101b, 101c, 101d, 101x, 101y) des autonomen Staubsaugers (101) innerhalb eines räumlich definierten Bereichs (A1),
Speichern in einer Speichervorrichtung (11) von mindestens einem Schwellenwert von angesaugten Partikeln (P1) entlang des zurückgelegten Weges (102, 201, 301);
**gekennzeichnet durch** weiteres Speichern eines zurückgelegten Weges (102, 201, 301) des autonomen Staubsaugers (X1) auf der Grundlage der bestimmten Positionsdaten (101, 101a, 101b, 101c, 101d, 101x, 101y) innerhalb des räumlich definierten Bereichs (A1) und
Anpassen einer Saugleistung des autonomen Staubsaugers (X1) in Abhängigkeit von dem mindestens einen zuvor gespeicherten Schwellenwert für den Fall, dass der autonome Staubsauger (X1) den zurückgelegten Weg (102, 201, 301) zumindest teilweise überlappt.

12. Tracking-Verfahren gemäß Anspruch 11, wobei die Bestimmung der Positionsdaten durch Kommunikation mit einer Kommunikationsvorrichtung an einer vorbestimmten Referenzposition durchgeführt wird.

13. Tracking-Verfahren gemäß Anspruch 11, wobei die Speicherung des zurückgelegten Weges durch die Speichervorrichtung (11) und/oder durch Eingabe des mindestens einen Schwellenwertes der angesaugten Partikel (P1) in eine elektronische Karte erfolgt.

14. Tracking-Verfahren gemäß Anspruch 11, wobei eine Detektion des mindestens einen gespeicherten Schwellenwertes entlang des zurückgelegten Weges (102, 201, 301) durch eine mikromechanische Vorrichtung (12) auf Basis der Detektion von Partikeln erfolgt.

15. Autonomer Staubsauger (X1) mit einem Tracking-System (T1) nach einem der Ansprüche 1 bis 10.

## Revendications

1. Système de suivi (T1) pour faire fonctionner un aspirateur autonome (X1), le système de suivi (T1) comprenant :
un dispositif de détermination de position (10) configuré pour détecter des données de position (101, 101a, 101b, 101c, 101d, 101x, 101y) de l'aspirateur autonome (X1) dans une zone définie dans l'espace (A1) ;
un dispositif de stockage (11) configuré pour stocker au moins une valeur seuil de particules aspirées (P1) le long du chemin parcouru (102, 201, 301) ;
**caractérisé en ce que** le dispositif de stockage est en outre configuré pour stocker un trajet parcouru (102, 201, 301) de l'aspirateur autonome (X1) sur la base des données de position déterminées (101, 101a, 101b, 101c, 101d, 101x, 101y) dans la zone définie dans l'espace (A1), et
dans lequel le système de suivi (T1) est configuré pour ajuster une capacité d'aspiration de l'aspirateur autonome (X1) en fonction de l'au moins une valeur seuil précédemment stockée dans le cas où l'aspirateur autonome (X1) chevauche au moins partiellement le chemin parcouru (102, 201, 301).

2. Système de suivi selon la revendication 1, dans lequel le chemin parcouru (102, 201, 301) comprend des zones de chevauchement (103, 104, 202, 302).

3. Système de suivi selon les revendications 1 à 2, dans lequel le chemin parcouru (102, 201, 301) comprend un nombre minimal de zones de chevauchement (103, 104, 202, 302) sur la base des données de position détectées (101, 101a, 101b, 101c, 101d, 101x, 101y) de l'aspirateur autonome (X1).

4. Système de suivi selon l'une quelconque des revendications précédentes, dans lequel l'au moins une valeur seuil est détectée par un dispositif micromécanique (12).

5. Système de suivi selon la revendication 4, dans lequel le dispositif micromécanique (12) est configuré pour détecter des particules de saleté pour les comparer à au moins trois valeurs seuils croissantes.

6. Système de suivi selon l'une quelconque des revendications précédentes, dans lequel la capacité d'aspiration de l'aspirateur autonome (X1) augmente avec les valeurs seuils croissantes.

7. Système de suivi selon l'une quelconque des revendications précédentes, dans lequel le chemin parcouru (102, 201, 301) est au moins partiellement un chemin en arc de cercle.

8. Système de suivi selon l'une quelconque des revendications précédentes, dans lequel le dispositif de stockage configuré pour stocker le trajet parcouru (102, 201, 301) de l'aspirateur autonome (X1) sur la base des données de position (101, 101a, 101b, 101c, 101d, 101x, 101y) dans la zone définie dans l'espace (A1) comprend en outre une carte électronique et dans lequel la carte électronique est configurée pour entrer les niveaux de saleté des particules aspirées (P1) dans la carte électronique.

9. Système de suivi (10) selon la revendication 8, dans lequel la carte électronique est configurée pour entrer une existence d'un obstacle (5) dans la zone définie dans l'espace (A1).

10. Système de suivi (10) selon l'une quelconque des revendications précédentes, dans lequel le dispositif de détermination de position (10) est configuré pour communiquer avec un dispositif de communication à une position de référence prédéterminée.

11. Méthode de suivi pour le fonctionnement d'un aspirateur autonome (X1 ), la méthode de suivi comprenant les étapes de :
déterminer des données de position (101, 101a, 101b, 101c, 101d, 101x, 101y) de l'aspirateur autonome (101) dans une zone définie dans l'espace (A1),
le stockage dans un dispositif de stockage (11) d'au moins une valeur seuil de particules aspirées (P1) le long du trajet parcouru (102, 201, 301) ;
**caractérisé par** le fait de stocker en outre un trajet parcouru (102, 201, 301) de l'aspirateur autonome (X1) sur la base des données de position déterminées (101, 101a, 101b, 101c, 101d, 101x, 101y) à l'intérieur de la zone définie dans l'espace (A1) ; et
ajuster une capacité d'aspiration de l'aspirateur autonome (X1) en fonction de l'au moins une valeur de seuil précédemment stockée dans le cas où l'aspirateur autonome (X1) chevauche au moins partiellement le chemin parcouru (102, 201, 301).

12. Méthode de suivi selon la revendication 11, dans laquelle la détermination des données de position est effectuée en communiquant avec un dispositif de communication à une position de référence prédéterminée.

13. Méthode de suivi selon la revendication 11, dans laquelle le stockage du chemin parcouru est effectué par le dispositif de stockage (11) et/ou est en outre effectué en entrant l'au moins une valeur seuil des particules aspirées (P1) dans une carte électronique.

14. Méthode de suivi selon la revendication 11, dans laquelle une détection de l'au moins une valeur seuil stockée le long du chemin parcouru (102, 201, 301) est effectuée par un dispositif micromécanique (12) sur la base de la détection des particules.

15. Aspirateur autonome (X1) comprenant un système de suivi (T1) selon les revendications 1 à 10.
